# EUROPEAN PATENT APPLICATION

(11) **EP 3 125 093 A1**
(43) Date of publication of application: **01.02.2017**
(21) Application number: 16179982.0
(22) Date of filing: 18.07.2016
(51) Int. Cl.: G06F 3/0481, G06F 3/0484, G06F 21/31, G06F 21/62

(54) **METHOD AND DEVICE FOR APPLICATION INTERACTION**

(30) Priority: 27.07.2015 CN 201510447116
(71) Applicant: Xiaomi Inc., Beijing 100085 (CN)
(72) Inventor: XIANGLI, Fei, Haidian District, Beijing 100085 (CN); QIAN, Zhuang, Haidian District, Beijing 100085 (CN); CHEN, Baoke, Haidian District, Beijing 100085 (CN)
(74) Representative: Nevett, Duncan

(57) **Abstract**

The present disclosure provides a method for application interaction. The method includes: acquiring (101) a graphical account identification of an application, wherein the graphical account identification is configured to graphically identify login-in account information currently used by the application; and displaying (102) the acquired graphical account identification at a preset position on the icon of the application. In the present disclosure, before opening applications, a user can visually distinguish the login-in accounts and identities used by respective applications under the prompts of the graphical account identifications, and thereby the efficiency for managing the login-in accounts of respective applications by the user is greatly improved.

## Description

### TECHNICAL FIELD

The present disclosure relates to the communication field, and more particularly, to a method and device for application interaction.

### BACKGROUND

With the proliferation of smart phones and development of mobile Internet, there are more and more applications developed for users' smart phones. A user may work and seek entertainment through operating the applications on his/her smart phone. During the usage of diversifying applications on a smart phone, the user may login in using different account numbers, i.e., login in with different identities.

### SUMMARY OF THE INVENTION

In order to overcome problems in related arts, the present disclosure provides a method and device for application interaction.

According to a first aspect of embodiments of the present disclosure, there is provided a method for application interaction, including:
acquiring a graphical account identification of an application, wherein the graphical account identification is configured to graphically identify login-in account information currently used by the application; and displaying the acquired graphical account identification at a preset position on the icon of the application.

Optionally, the method further includes: judging whether a preset trigger event with respect to the application is monitored; and when the preset trigger event with respect to the application is monitored, acquiring the graphical account identification of the application.

Optionally, the judging whether the preset trigger event with respect to the application is monitored includes: monitoring a touch event with respect to an icon of the application; judging whether the monitored touch event is a first preset event; and when the monitored touch event is the first preset event, determining that the preset trigger event with respect to the application is monitored.

Optionally, the judging whether the preset trigger event with respect to the application is monitored includes: monitoring a touch event with respect to a system desktop;

judging whether the monitored touch event is a second preset event; when the monitored touch event is the second preset event, outputting an application selection interface to a user; and when a plurality of applications selected by the user in the application selection interface include the application, determining that the preset trigger event with respect to the application is monitored.

Optionally, the acquiring the graphical account identification of the application includes: outputting an image selection interface to a user, wherein the image selection interface includes a plurality of preset avatar images; and acquiring an avatar image selected by the user for the application in the image selection interface as the graphical account identification of the application, and locally saving a correspondence between the avatar image and a login-in account currently used by the application.

Optionally, the acquiring the graphical account identification of the application includes: outputting an image selection interface to a user, wherein the image selection interface includes a plurality of preset avatar images and frequently used login-in accounts of the application; and acquiring an avatar image selected by the user for the application in the image selection interface as the graphical account identification of the application, and locally saving a correspondence between the avatar image and a login-in account selected by the user for the avatar image in the image selection interface.

Optionally, the outputting the image selection interface to the user includes: outputting a function selection interface to the user, wherein the function selection interface includes setting options for the graphical account identification; and when a setting option for the graphical account identification is selected by the user through operating the function selection interface, starting a function for setting the graphical account identification, and outputting the image selection interface to the user; or, when a setting option for the graphical account identification is selected by the user through operating the function selection interface, outputting an application selection interface to the user, and when the application is selected by the user in the application selection interface, outputting the image selection interface to the user.

Optionally, the displaying the acquired graphical account identification at the preset position on the icon of the application includes: acquiring a login-in account currently used by the application; querying the correspondence to acquire an avatar image corresponding to the login-in account currently used by the application; and displaying the acquired avatar image at the preset position on the icon of the application.

Optionally, the displaying the acquired avatar image at the present position on the icon of the application as the graphical account identification of the application includes: judging whether the acquired avatar image is of a size greater than a preset size; when the avatar image is of a size less than or equal to the preset size, displaying the avatar image at the preset position on the icon of the application; and when the avatar image is of a size greater than the preset size, processing the avatar image into an avatar image of the preset size and then displaying the processed avatar image at the preset position on the icon of the application.

Optionally, the method further includes: when detecting a logout state of the application, removing the avatar image displayed at the preset position on the icon of the application.

According to a second aspect of embodiments of the present disclosure, there is provided a device for application interaction, including: an acquisition module configured to acquire a graphical account identification of an application, wherein the graphical account identification is configured to graphically identify login-in account information currently used by the application; and a display module configured to display the acquired graphical account identification at a preset position on the icon of the application.

Optionally, the device further includes: a judgment module configured to determine whether a preset trigger event with respect to the application is monitored; wherein when the preset trigger event with respect to the application is monitored, the acquisition module acquires the graphical account identification of the application.

Optionally, the judgment module includes: a first monitoring submodule configured to monitor a touch event with respect to the icon of the application; a first judgment submodule configured to determine whether the monitored touch event is a first preset event; and a first determination submodule configured to, when the monitored touch event is the first preset event, determine that the preset trigger event with respect to the application is monitored.

Optionally, the judgment module includes: a second monitoring submodule configured to monitor a touch event with respect to a system desktop; a second judgment submodule configured to determine whether the monitored touch event is a second preset event; and a second determination submodule configured to, when the monitored touch event is the second preset event, determine that the preset trigger event with respect to the application is monitored.

Optionally, the acquisition module includes: a first output submodule configured to output an image selection interface to a user, wherein the image selection interface includes a plurality of preset avatar images; and a first acquisition submodule configured to acquire an avatar image selected by the user for the application in the image selection interface as the graphical account identification of the application, and locally save a correspondence between the avatar image and a login-in account currently used by the application.

Optionally, the acquisition module includes: a second output submodule configured to output an image selection interface to a user, wherein the image selection interface includes a plurality of preset avatar images and frequently used login-in accounts of the application; and a second acquisition submodule configured to acquire an avatar image selected by the user for the application in the image selection interface as the graphical account identification of the application, and locally save a correspondence between the avatar image and a login-in account selected by the user for the avatar image in the image selection interface.

Optionally, the first output submodule includes: a first output unit configured to output a function selection interface to a user, wherein the function selection interface includes setting options for the graphical account identification; and a second output unit configured to, when a setting option for the graphical account identification is selected by the user through operating the function selection interface, output the image selection interface to the user; or, when a setting option for the graphical account identification is selected by the user through operating the function selection interface, output an application selection interface to the user, and when the application is selected by the user in the application selection interface, output the image selection interface to the user; and wherein the second output submodule includes: a first output unit configured to output a function selection interface to a user, wherein the function selection interface comprises setting options for the graphical account identification; and a second output unit configured to, when a setting option for the graphical account identification is selected by the user through operating the function selection interface, output the image selection interface to the user; or, when a setting option for the graphical account identification is selected by the user through operating the function selection interface, output an application selection interface to the user, and when the application is selected by the user in the application selection interface, output the image selection interface to the user.

Optionally, the display module includes: a third acquisition submodule configured to acquire a login-in account currently used by the application; a querying submodule configured to query the correspondence to acquire an avatar image corresponding to the login-in account currently used by the application; and a display submodule configured to display the acquired avatar image at the preset position on the icon of the application.

Optionally, the acquisition module further includes: a third judgment submodule configured to judge whether the acquired avatar image is of a size greater than a preset size; wherein when the avatar image is of a size less than or equal to the preset size, the display module displays the avatar image at the preset position on the icon of the application; and a processing submodule configured to, when the avatar image is of a size greater than the preset size, process the avatar image into an avatar image of the preset size; and then the processed avatar image is displayed at the preset position on the icon of the application by the display module.

Optionally, the device further includes: a removing module configured to, when a logout state of the application is detected, remove the avatar image displayed at the preset position on the icon of the application.

According to a third aspect of embodiments of the present disclosure, there is provided a device for application interaction, including: a processor; and a memory for storing instructions executable by the processor; wherein the processor is configured to: acquire a graphical account identification of an application, wherein the graphical account identification is configured to graphically identify login-in account information currently used by the application; and display the acquired graphical account identification at a preset position on an icon of the application.

According to a fourth aspect of embodiments of the present disclosure, there is provided a computer program, which when executing on a processor, performs a method according to the first aspect.

In the above embodiments of the present disclosure, a novel application interaction design is proposed. A graphical account identification which is configured to graphically identify login-in account information currently used by an application and is set by a user for the application is acquired, and the acquired graphical account identification is displayed at a preset position on an icon of the application. Thus, before opening applications, the user can visually distinguish the login-in accounts and identities used by respective applications under the prompts of the graphical account identifications, and thereby the efficiency for managing the login-in accounts of respective applications by the user is greatly improved.

It is to be understood that both the foregoing general description and the following detailed description are exemplary and explanatory only and are not restrictive of the invention.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a flow chart illustrating a method for application interaction according to an exemplary embodiment;
Fig. 2 is a flow chart illustrating another method for application interaction according to an exemplary embodiment;
Fig. 3 is a schematic diagram illustrating displaying of a graphical account identification on an icon of application according to an exemplary embodiment;
Fig. 4 is a block diagram illustrating a device for application interaction according to another exemplary embodiment;
Fig. 5 is a block diagram illustrating another device for application interaction according to another exemplary embodiment;
Fig. 6 is a block diagram illustrating another device for application interaction according to another exemplary embodiment;
Fig. 7 is a block diagram illustrating another device for application interaction according to another exemplary embodiment;
Fig. 8 is a block diagram illustrating another device for application interaction according to another exemplary embodiment;
Fig. 9 is a block diagram illustrating another device for application interaction according to another exemplary embodiment;
Fig. 10 is a block diagram illustrating another device for application interaction according to another exemplary embodiment;
Fig. 11 is a block diagram illustrating another device for application interaction according to another exemplary embodiment;
Fig. 12 is a block diagram illustrating another device for application interaction according to another exemplary embodiment;
Fig. 13 is a block diagram illustrating another device for application interaction according to another exemplary embodiment; and
Fig. 14 is a block diagram illustrating a structure applicable in a device for application interaction according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of devices and methods consistent with some aspects related to the invention as recited in the appended claims.

The terminologies used herein are only for describing particular embodiments but not for limiting the present disclosure. The singular form words "a", "the", and "said" used in the present disclosure and append claims are intended to include plural form, unless otherwise clearly stated. Also, it shall be appreciated that the terminology "and/or" used herein refers to any or all combinations of one or more listed related items.

It shall be appreciated that although the present disclosure uses terminologies "first", "second", and "third" and the like to describe various information, the information shall not be limited by these terminologies. Using these terminologies is only for distinguishing information of the same type. For example, without departing from the scope of the present disclosure, the first information may be referred to as the second information, and similarly, the second information may be referred to as the first information. Depending on the context, the terminology "if" used herein may be interpreted as "when" or "in response to determining that...".

When using multiple applications on a smart phone, a user may login in with different login-in account numbers, i.e., with different identities. For example, in some social applications (for example, WeChat) with higher privacy, a user may use a real identity, and login in using a real picture and name; while in some other open social applications (for instance, Momo, a geographical position-based social application), a user may login in using a totally different identity.

Under such application scenario, because the application lacks a mechanism for prompting and distinguishing account identities of each application, during usage of a smart phone, a user has to open an application to find the account information such as the login-in account and the avatar image when he/she logins in and thereby to confirm the login-in identity currently used. This method results in a very low efficiency.

In view of the above, the present disclosure proposes a novel application interaction design. A graphical account identification which is configured to graphically identify login-in account information currently used by an application and is set by a user for the application is acquired, and the acquired graphical account identification is displayed at a preset position on an icon of the application. Thus, before opening applications, the user can visually distinguish the login-in accounts and identities used by respective applications under the prompts of the graphical account identifications, and thereby the efficiency for managing the login-in accounts of respective applications by the user is greatly improved.

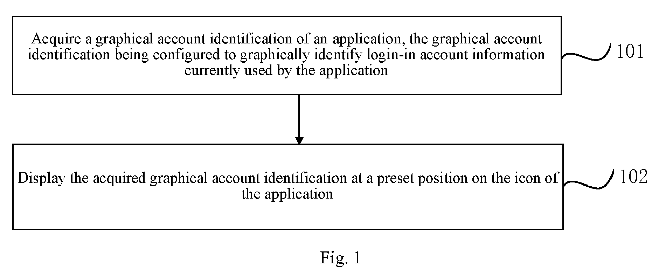

Fig. 1 illustrates a method for application interaction according to an exemplary embodiment. As shown in Fig. 1, the method is applied in a terminal and includes the following steps.

In step 101, a graphical account identification of an application is acquired, the graphical account identification being configured to graphically identify login-in account information currently used by the application.

In step 102, the acquired graphical account identification is displayed at a preset position on the icon of the application.

In the embodiment, the terminal may be a mobile terminal, a PAD terminal or a PC terminal. For example, the terminal may be a user's touch screen smart phone. The application may be an APP installed on a user's the mobile terminal. For example, the application may be social APPs installed on user's smart phone such as WeChat, Momo or the like. The graphical account identification may be a graphical identification configured to identify the login-in account used by the user during login-in into an application. For example, the graphical identification may be a user avatar image corresponding to a login-in account used by the user.

The graphical account identification may be set by a user through a setting interface provided by the terminal for the user. The setting interface may be output to the user by the terminal after a preset trigger event with respect to the application is monitored.

The preset trigger event may include a preset touch event with respect to the icon of the application, or include a preset touch event with respect to a system desktop of the terminal. In practical usage, the preset touch event may include a long press event or the like.

The following description is made with an example where the preset touch event is a long press event and the graphical account identification is a user's avatar image corresponding to the login-in account used by the user. Rather, the preset touch event may also include other types of touch events, and the graphical account identification may also be other types of identification that is capable of graphically identify the login-in account information of the user, and the present embodiment does not impose specific limitations on this.

In an application scenario, when a user wants to set a graphical account identification for a single application, the preset trigger event may be a preset touch event with respect to the icon of the application. At this time, the user may perform a long press operation on the icon of the application to trigger the terminal to output the setting interface for the user, and set the graphical account identification for the application. Under such condition, the setting interface may include a function selection interface and an image selection interface.

Meanwhile, the terminal may monitor in real time touch events with respect to the icon of the application at background, and judge whether a monitored touch event is a long press event; if the monitored touch event is a long press event, the terminal may determine that the preset trigger event with respect to the application is monitored, and may output the function selection interface to the user firstly.

The function selection interface may be a function selection interface for providing setting options for the graphical account identification to a user. The user may select a setting option for the graphical account identification in the function selection interface to enable a function of setting the graphical account identification for the application.

For example, in operating systems of majority terminals, some specific operations will be usually triggered when a user performs a long press operation with respect to an application. For example, when the user performs a long press operation with respect to the icon of the application on a system desktop, the system desktop will be usually triggered into an editing mode; under the editing mode, the user may move or delete icons of applications on the system desktop. Thus, in the embodiment, the function selection interface may be a selection interface including an option of "Enter Desktop Editing Mode" and an option of "Set Account Identification for Application". When the user selects the option of "Enter Desktop Editing Mode" in the function selection interface, the system may be triggered to enter the desktop editing mode. Similarly, when the user selects the option of "Set Account Identification for Application" in the function selection interface, the function of setting the graphical account identification for the current application may be enabled.

When the user enables the function of setting the graphical account identification for the application through selecting the setting option of the graphical account identification in the function selection interface, the terminal may be triggered to output the foregoing image selection interface to the user at this moment.

The image selection interface may include a plurality of preset avatar images, the plurality of avatar images may be extracted by the terminal from system data of respective applications at the system background, and a user may select an avatar image that can identify the current login-in account number of the application in the image selection interface as the graphical account identification of the application.

In another application scenario, when a user wants to set graphical account identifications for a plurality of applications in batch, the preset trigger event may be a preset touch event with respect to the system icon of the terminal. At this moment, the user may perform a long press operation on the system icon of the terminal to trigger the terminal to output the setting interface for the user, and the user may set the graphical account identifications for the plurality of applications. Under such condition, the setting interface may include a function selection interface, an application selection interface and an image selection interface.

Meanwhile, the terminal may monitor in real time touch events with respect to the icon of the application at the background, and judge whether a monitored touch event is a long press event; if the monitored touch event is a long press event, the terminal may determine that the preset trigger event with respect to the application is monitored at this moment, and may output the function selection interface to the user firstly.

As previously mentioned, the function selection interface may be a function selection interface for providing setting options for the graphical account identification to a user. The user may select a setting option for the graphical account identification in the function selection interface to enable a function of setting the graphical account identification for the application.

When the user enables the function of setting the graphical account identification for the application through selecting a setting option for the graphical account identification in the function selection interface, the terminal may be triggered to output the foregoing application selection interface to the user at this moment. The application selection interface may be a selection interface including all the applications in the terminal, and the user may select from the interface an application for which the user wants to set a graphical account identification. When the user selects from the application interface an application for which the user wants to set a graphical account identification, the user may select one or more applications. When the user selects a plurality of applications, the user may set corresponding graphical account identifications for the plurality of applications selected in batch.

In the application selection interface, one confirmation button may also be provided. After a user selects from the application selection interface a plurality of applications for which the user wants to set graphical account identifications, if the user taps the confirmation button, it means that the user has already finished selection. At this moment, the terminal may output the foregoing image selection interface to the user so that the user may set graphical account identifications for the selected applications.

The image selection interface may include a plurality of preset avatar images and a plurality of applications that have been selected by the user, and the user may select for the selected applications avatar images which can identify the current login-in account numbers of these applications as the graphical account identifications of the applications. For example, during implementation, the image selection interface may include a plurality of preset avatar images, and may also include a plurality of blank areas respectively corresponding to the plurality of applications. When the user selects an avatar image for any one of the plurality of applications, the selected avatar image may be directly dragged into a blank area corresponding to the application.

In the embodiment, one confirmation button may be provided in the image selection interface as shown in the above two scenarios. After the user selects for a single application or a plurality of applications the avatar image(s) that can identify the current login-in account number(s) of the application(s) in the image selection interface, if the user taps the confirmation button, it means that the setting of the graphical account identification(s) is finished, and the operating system of the terminal may acquire the avatar image(s) selected by the user in the image selection interface from the background, and locally save a correspondence between acquired the avatar image and the current login-in account number of the corresponding application, and the correspondence may be queried by the system.

After the user finishes setting the graphical account identification for an application through the foregoing image selection interface, the terminal may read the current login-in account number of the application every time when the system desktop (Launcher) is started, and then query the foregoing correspondence to acquire the corresponding avatar image, and then displays the found avatar image at the preset position on the icon of the application as the graphical account identification of the application.

In the embodiment, because the terminal locally saves the correspondence between avatar images selected by the user for applications and current login-in account numbers of the applications, when the login-in account of any application is switched, i.e., the user uses other login-in account to login in to the application, the user needs to reset a corresponding graphical account identification for the application according to the implementation process described in the above embodiments.

In order to solve this problem, in another exemplary implementation as shown in the embodiment, the foregoing image selection interface may include a plurality of preset avatar images and a plurality of applications which have been selected by the user, and may also include frequently used login-in account numbers of the applications.

For example, in the application scenario where the user sets a graphical account identification for a single application, after the user performs a long press operation with respect to the icon of the application to trigger the terminal to output the foregoing image selection interface, the selection interface may include a plurality of preset avatar images and frequently used login-in account numbers of the application. In the application scenario where the user sets graphical account identifications for a plurality of applications in batch, after the user performs a long press operation with respect to the system desktop to trigger the terminal to output the foregoing image selection interface, the selection interface may include a plurality of preset avatar images, a plurality of applications that have been selected by the user, and frequently used login-in account numbers which corresponds to the plurality of applications, respectively.

Because the foregoing image selection interface further includes all the frequently used login-in accounts of the user, the image selection interface is not a simple picture selector, and the user may further designate a corresponding login-in account number for an avatar image in addition to selecting an avatar image for the application in the image selection interface as the graphical account identification. When the user finishes selection, the terminal may locally save the correspondence between the avatar image selected by the user and the login-in account number designated by the user for the avatar image, and the correspondence may be queried by the system later.

For example, it is assumed that the image selection interface includes two frequently used login-in accounts A and B as well as two avatars 1 and 2, the user may select the avatar 1 as the user avatar that can identify the login-in account A, and the user may select the avatar 2 as the user avatar that can identify the login-in account B. After the user finishes selection, the correspondence between the login-in account A and the avatar 1 and the correspondence between the login-in account B and the avatar 2 have been established and saved in a first selection interface at this moment.

In such a case, when the login-in account of the application is switched, i.e., the user uses other frequently used login-in account to login in to the application, because the user has already selected the avatar images for all the frequently used login-in accounts in the image selection interface, and the terminal has locally saved the correspondences, when the login-in account of the application is switched, the user does not need to reset a corresponding graphical account identification for the current login-in account, and the operating system of the terminal may directly query the correspondence which has been saved at the background, so that the terminal can automatically acquire the avatar image corresponding to the new login-in account number after login-in again.

In the embodiment, when the terminal displays the acquired avatar image at the preset position on the icon of the application, the position for displaying the avatar image on the icon may not be specially limited. For example, during implementation, the position for displaying the avatar image on the icon of the application may be the upper left corner of the icon of the application; when a user taps the confirmation button in the image selection interface, a floating layer with a preset size (for example, 40 pixels) and a preset shape (for example, circle) may be immediately established on the upper left corner of the icon of the application, then the avatar image which has been set for the application by the user is displayed on the established floating layer. Rather, before displaying the acquired avatar image at the foregoing preset position, the terminal may also judge whether the acquired avatar image is of a size greater than the preset size; when the avatar image is of a size is less than or equal to the preset size, the terminal may directly display the avatar image at the preset position on the icon of the application; and when the avatar image is of a size greater than the preset size, the terminal may further process the avatar image into an avatar image of the preset size and then display the processed avatar image at the preset position on the icon of the application.

In the embodiment, when the user logs out the current login-in account number through operating the application, and the operating system of the terminal detects a logout state of the application at the background, the avatar image which has been displayed at the preset position on the icon of the application may be removed.

Rather, if the user logins in again using other frequently used login-in account after logging out the current login-in account number, the user may reset a corresponding user avatar for the application through performing a long press operation on the icon of the application at this moment. Or, if the user has already set corresponding avatar images for all the frequently used login-in accounts through the image selection interface, and the correspondences between the frequently used login-in accounts and the set avatar images are saved, the operating system of the terminal may directly query the correspondences at the background, acquire the avatar image corresponding to the current login-in account number, and correspondingly update the user avatar displayed on the icon of the application.

In the embodiment, as mentioned above, a user may set a graphical account identification for an application by long-pressing the icon of the application or long-pressing the system desktop to trigger the terminal to output the above setting interface. In addition to this, in implementation, the graphical account identification of the application may be automatically acquired by the operating system of the terminal. For example, when the graphical account identification is a user avatar corresponding to the current login-in account of the application, the operating system of the terminal may firstly detect whether the application is currently in a login-in state; if the application is in the login-in state, the current user avatar of the application may be read out from system data of the application, and the read out user avatar is automatically displayed at a preset position on the icon of the application.

In the above embodiments of the present disclosure, a novel application interaction design is proposed. A graphical account identification which is configured to graphically identify login-in account information currently used by an application and is set by a user for the application is acquired, and the acquired graphical account identification is displayed at a preset position on an icon of the application. Thus, before opening applications, the user can visually distinguish the login-in accounts and identities used by respective applications under the prompts of the graphical account identifications, and thereby the efficiency for managing the login-in accounts of respective applications by the user is greatly improved.

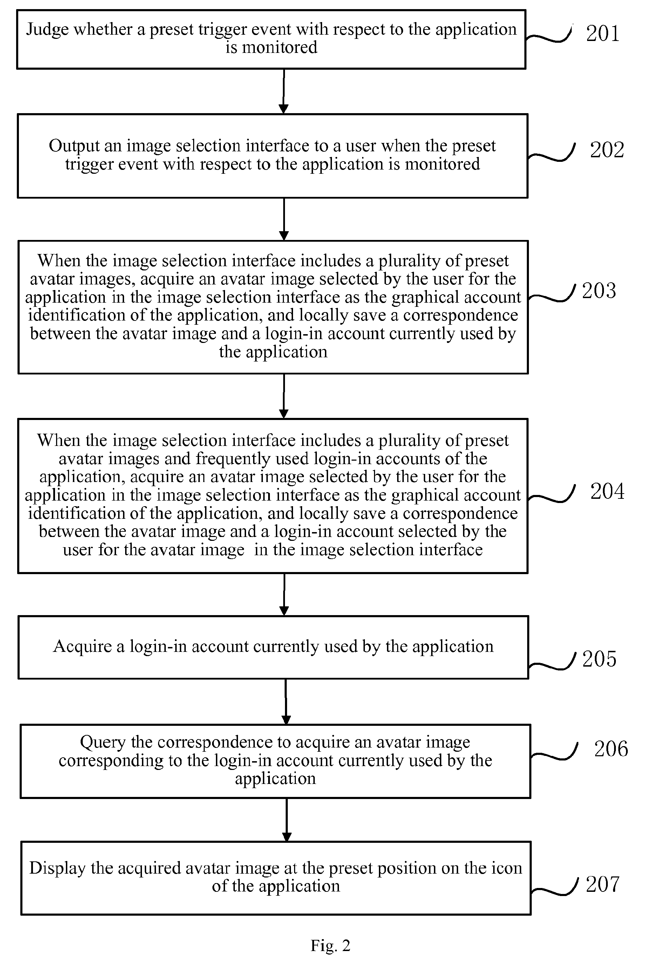

Fig. 2 illustrates a method for application interaction according to an exemplary embodiment. As shown in Fig. 2, the method is applied in a terminal and includes the following steps.

In step 201, whether a preset trigger event with respect to the application is judged or determined.

In step 202, an image selection interface is outputted to a user when the preset trigger event with respect to the application is monitored or detected.

The image selection interface includes a plurality of preset avatar images; or the image selection interface includes a plurality of preset avatar images and frequently used login-in accounts of the application.

In step 203, when the image selection interface includes a plurality of preset avatar images, an avatar image selected by the user for the application in the image selection interface is acquired as the graphical account identification of the application, and a correspondence between the acquired avatar image and a login-in account currently used by the application is locally saved.

In step 204, when the image selection interface includes a plurality of preset avatar images and frequently used login-in accounts of the application, an avatar image selected by the user for the application in the image selection interface is acquired as the graphical account identification of the application, and a correspondence between the avatar image and a login-in account selected by the user for the avatar image in the image selection interface is locally saved.

In step 205, a login-in account currently used by the application is acquired.

In step 206, the correspondence is queried to acquire an avatar image corresponding to the login-in account currently used by the application.

In step 207, the acquired avatar image is displayed at the preset position on the icon of the application.

In the embodiment, the terminal may be a mobile terminal, a PAD terminal or a PC terminal. For example, the terminal may be a user's touch screen smart phone. The application may be an APP installed on a user's the mobile terminal. For example, the application may be social APPs installed on user's smart phone such as WeChat, Momo or the like. The graphical account identification may be a graphical identification configured to identify the login-in account used by the user during login-in into an application. For example, the graphical identification may be a user avatar image corresponding to a login-in account used by the user.

The graphical account identification may be set by a user through a setting interface provided by the terminal for the user. The setting interface may be output to the user by the terminal after a preset trigger event with respect to the application is monitored.

The preset trigger event may include a preset touch event with respect to the icon of the application, or include a preset touch event with respect to a system desktop of the terminal. The preset touch event may include a long press event or the like.

The following description is made with an example where the preset touch event is a long press event and the graphical account identification is a user's avatar image corresponding to the login-in account used by the user. Rather, the preset touch event may also include other types of touch events, and the graphical account identification may also be other types of identification that is capable of graphically identify the login-in account information of the user, and the present embodiment does not impose specific limitations on this.

In an application scenario, when a user wants to set a graphical account identification for a single application, the preset trigger event may be a preset touch event with respect to the icon of the application. At this time, the user may perform a long press operation on the icon of the application to trigger the terminal to output the setting interface for the user, and set the graphical account identification for the application. Under such condition, the setting interface may include a function selection interface and an image selection interface.

Meanwhile, the terminal may monitor in real time touch events with respect to the icon of the application at background, and judge whether a monitored touch event is a long press event; if the monitored touch event is a long press event, the terminal may determine that the preset trigger event with respect to the application is monitored, and may output the function selection interface to the user firstly.

The function selection interface may be a function selection interface for providing setting options for the graphical account identification to a user. The user may select a setting option for the graphical account identification in the function selection interface to enable a function of setting the graphical account identification for the application.

For example, in operating systems of majority terminals, some specific operations will be usually triggered when a user performs a long press operation with respect to an application. For example, when the user performs a long press operation with respect to the icon of the application on a system desktop, the system desktop will be usually triggered into an editing mode; under the editing mode, the user may move or delete icons of applications on the system desktop. Thus, in the embodiment, the function selection interface may be a selection interface including an option of "Enter Desktop Editing Mode" and an option of "Set Account Identification for Application". When the user selects the option of "Enter Desktop Editing Mode" in the function selection interface, the system may be triggered to enter the desktop editing mode. Similarly, when the user selects the option of "Set Account Identification for Application" in the function selection interface, the function of setting the graphical account identification for the current application may be enabled.

When the user enables the function of setting the graphical account identification for the application through selecting the setting option of the graphical account identification in the function selection interface, the terminal may be triggered to output the foregoing image selection interface to the user at this moment.

The image selection interface may include a plurality of preset avatar images, the plurality of avatar images may be extracted by the terminal from system data of respective applications at the system background, and a user may select an avatar image that can identify the current login-in account number of the application in the image selection interface as the graphical account identification of the application.

In another application scenario, when a user wants to set graphical account identifications for a plurality of applications in batch, the preset trigger event may be a preset touch event with respect to the system icon of the terminal. At this moment, the user may perform a long press operation on the system icon of the terminal to trigger the terminal to output the setting interface for the user, and the user may set the graphical account identifications for the plurality of applications. Under such condition, the setting interface may include a function selection interface, an application selection interface and an image selection interface.

Meanwhile, the terminal may monitor in real time touch events with respect to the icon of the application at the background, and judge whether a monitored touch event is a long press event; if the monitored touch event is a long press event, the terminal may determine that the preset trigger event with respect to the application is monitored at this moment, and may output the function selection interface to the user firstly.

As previously mentioned, the function selection interface may be a function selection interface for providing setting options for the graphical account identification to a user. The user may select a setting option for the graphical account identification in the function selection interface to enable a function of setting the graphical account identification for the application.

When the user enables the function of setting the graphical account identification for the application through selecting a setting option for the graphical account identification in the function selection interface, the terminal may be triggered to output the foregoing application selection interface to the user at this moment. The application selection interface may be a selection interface including all the applications in the terminal, and the user may select from the interface an application for which the user wants to set a graphical account identification. When the user selects from the application interface an application for which the user wants to set a graphical account identification, the user may select one or more applications. When the user selects a plurality of applications, the user may set corresponding graphical account identifications for the plurality of applications selected in batch.

In the application selection interface, one confirmation button may also be provided. After a user selects from the application selection interface a plurality of applications for which the user wants to set graphical account identifications, if the user taps the confirmation button, it means that the user has already finished selection. At this moment, the terminal may output the foregoing image selection interface to the user so that the user may set graphical account identifications for the selected applications.

The image selection interface may include a plurality of preset avatar images and a plurality of applications that have been selected by the user, and the user may select for the selected applications avatar images which can identify the current login-in account numbers of these applications as the graphical account identifications of the applications. For example, during implementation, the image selection interface may include a plurality of preset avatar images, and may also include a plurality of blank areas respectively corresponding to the plurality of applications. When the user selects an avatar image for any one of the plurality of applications, the selected avatar image may be directly dragged into a blank area corresponding to the application.

In the embodiment, one confirmation button may be provided in the image selection interface as shown in the above two scenarios. After the user selects for a single application or a plurality of applications the avatar image(s) that can identify the current login-in account number(s) of the application(s) in the image selection interface, if the user taps the confirmation button, it means that the setting of the graphical account identification(s) is finished, and the operating system of the terminal may acquire the avatar image(s) selected by the user in the image selection interface from the background, and locally save a correspondence between acquired the avatar image and the current login-in account number of the corresponding application, and the correspondence may be queried by the system.

After the user finishes setting the graphical account identification for an application through the foregoing image selection interface, the terminal may read the current login-in account number of the application every time when the system desktop (Launcher) is started, and then query the foregoing correspondence to acquire the corresponding avatar image, and then displays the found avatar image at the preset position on the icon of the application as the graphical account identification of the application.

In the embodiment, because the terminal locally saves the correspondence between avatar images selected by the user for applications and current login-in account numbers of the applications, when the login-in account of any application is switched, i.e., the user uses other login-in account to login in to the application, the user needs to reset a corresponding graphical account identification for the application according to the implementation process described in the above embodiments.

In order to solve this problem, in another exemplary implementation as shown in the embodiment, the foregoing image selection interface may include a plurality of preset avatar images and a plurality of applications which have been selected by the user, and may also include frequently used login-in account numbers of the applications.

For example, in the application scenario where the user sets a graphical account identification for a single application, after the user performs a long press operation with respect to the icon of the application to trigger the terminal to output the foregoing image selection interface, the selection interface may include a plurality of preset avatar images and frequently used login-in account numbers of the application. In the application scenario where the user sets graphical account identifications for a plurality of applications in batch, after the user performs a long press operation with respect to the system desktop to trigger the terminal to output the foregoing image selection interface, the selection interface may include a plurality of preset avatar images, a plurality of applications that have been selected by the user, and frequently used login-in account numbers which corresponds to the plurality of applications, respectively.

Because the foregoing image selection interface further includes all the frequently used login-in accounts of the user, the image selection interface is not a simple picture selector, and the user may further designate a corresponding login-in account number for an avatar image in addition to selecting an avatar image for the application in the image selection interface as the graphical account identification. When the user finishes selection, the terminal may locally save the correspondence between the avatar image selected by the user and the login-in account number designated by the user for the avatar image, and the correspondence may be queried by the system later.

For example, it is assumed that the image selection interface includes two frequently used login-in accounts A and B as well as two avatars 1 and 2, the user may select the avatar 1 as the user avatar that can identify the login-in account A, and the user may select the avatar 2 as the user avatar that can identify the login-in account B. After the user finishes selection, the correspondence between the login-in account A and the avatar 1 and the correspondence between the login-in account B and the avatar 2 have been established and saved in a first selection interface at this moment.

In such a case, when the login-in account of the application is switched, i.e., the user uses other frequently used login-in account to login in to the application, because the user has already selected the avatar images for all the frequently used login-in accounts in the image selection interface, and the terminal has locally saved the correspondences, when the login-in account of the application is switched, the user does not need to reset a corresponding graphical account identification for the current login-in account, and the operating system of the terminal may directly query the correspondence which has been saved at the background, so that the terminal can automatically acquire the avatar image corresponding to the new login-in account number after login-in again.

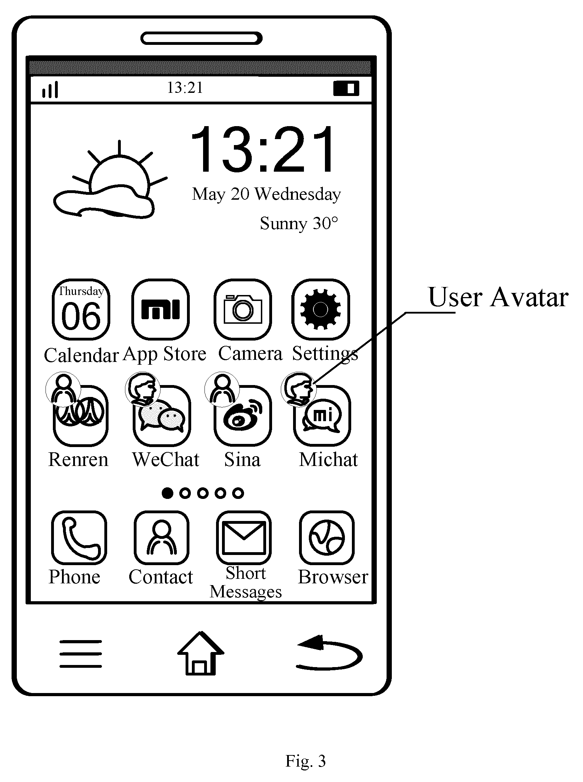

In the embodiment, when the terminal displays the acquired avatar image at the preset position on the icon of the application, the position for displaying the avatar image on the icon may not be specially limited. For example, as shown in Fig. 3, during implementation, the position for displaying the avatar image on the icon of the application may be the upper left corner of the icon of the application; when a user taps the confirmation button in the image selection interface, a floating layer with a preset size (for example, 40 pixels) and a preset shape (for example, circle) may be immediately established on the upper left corner of the icon of the application, then the avatar image which has been set for the application by the user is displayed on the established floating layer. Rather, before displaying the acquired avatar image at the foregoing preset position, the terminal may also judge whether the acquired avatar image is of a size greater than the preset size; when the avatar image is of a size is less than or equal to the preset size, the terminal may directly display the avatar image at the preset position on the icon of the application; and when the avatar image is of a size greater than the preset size, the terminal may further process the avatar image into an avatar image of the preset size and then display the processed avatar image at the preset position on the icon of the application.

In the embodiment, when the user logs out the current login-in account number through operating the application, and the operating system of the terminal detects a logout state of the application at the background, the avatar image which has been displayed at the preset position on the icon of the application may be removed.

Rather, if the user logins in again using other frequently used login-in account after logging out the current login-in account number, the user may reset a corresponding user avatar for the application through performing a long press operation on the icon of the application at this moment. Or, if the user has already set corresponding avatar images for all the frequently used login-in accounts through the image selection interface, and the correspondences between the frequently used login-in accounts and the set avatar images are saved, the operating system of the terminal may directly query the correspondences at the background, acquire the avatar image corresponding to the current login-in account number, and correspondingly update the user avatar displayed on the icon of the application.

In the embodiment, as mentioned above, a user may set a graphical account identification for an application by long-pressing the icon of the application or long-pressing the system desktop to trigger the terminal to output the above setting interface. In addition to this, in implementation, the graphical account identification of the application may be automatically acquired by the operating system of the terminal. For example, when the graphical account identification is a user avatar corresponding to the current login-in account of the application, the operating system of the terminal may firstly detect whether the application is currently in a login-in state; if the application is in the login-in state, the current user avatar of the application may be read out from system data of the application, and the read out user avatar is automatically displayed at a preset position on the icon of the application.

In the above embodiments of the present disclosure, a novel application interaction design is proposed. A graphical account identification which is configured to graphically identify login-in account information currently used by an application and is set by a user for the application is acquired, and the acquired graphical account identification is displayed at a preset position on an icon of the application. Thus, before opening applications, the user can visually distinguish the login-in accounts and identities used by respective applications under the prompts of the graphical account identifications, and thereby the efficiency for managing the login-in accounts of respective applications by the user is greatly improved.

Corresponding to the forgoing embodiments of the method for application interaction, the present disclosure also provides embodiments of devices.

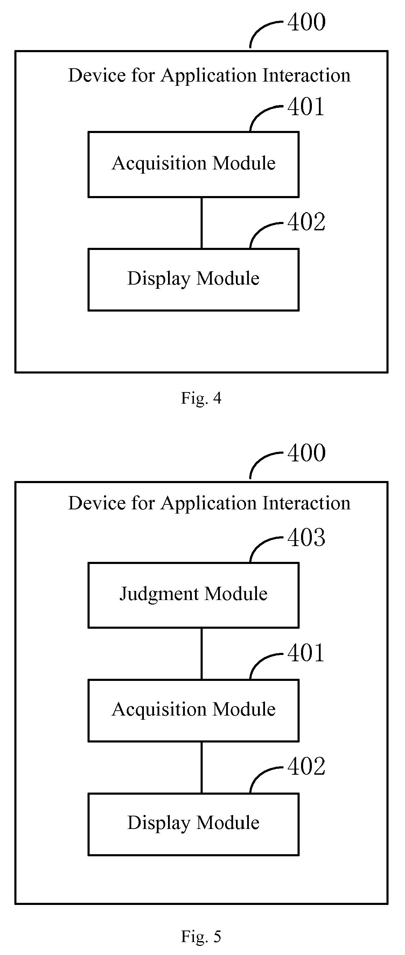

Fig. 4 is a block diagram illustrating a device for application interaction according to another exemplary embodiment.

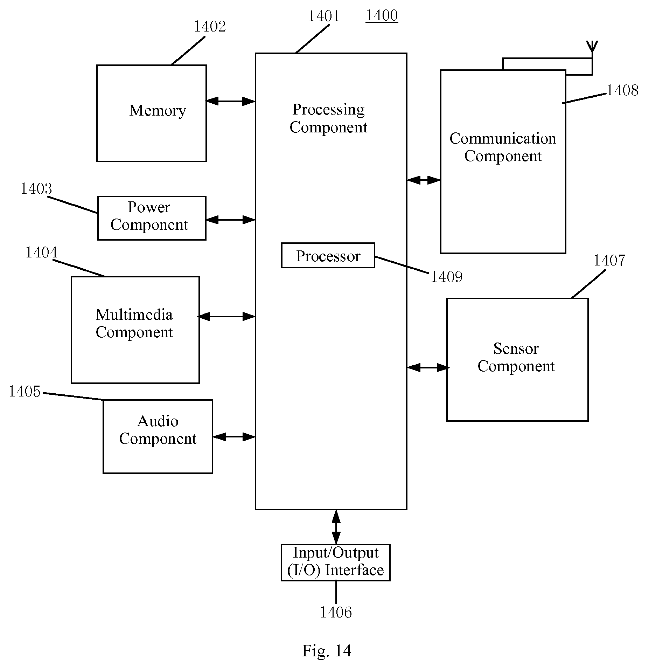

Referring to Fig. 14, the device 400 for application interaction according to an exemplary embodiment includes an acquisition module 401 and a display module 402.

The acquisition module 401 is configured to acquire a graphical account identification of an application, wherein the graphical account identification is configured to graphically identify login-in account information currently used by the application.

The display module 402 is configured to display the acquired graphical account identification at a preset position on the icon of the application.

The graphical account identification may include a user avatar corresponding to the login-in account.

In the above embodiments, a novel application interaction design is proposed. A graphical account identification which is configured to graphically identify login-in account information currently used by an application and is set by a user for the application is acquired, and the acquired graphical account identification is displayed at a preset position on an icon of the application. Thus, before opening applications, the user can visually distinguish the login-in accounts and identities used by respective applications under the prompts of the graphical account identifications, and thereby the efficiency for managing the login-in accounts of respective applications by the user is greatly improved.

Fig. 5 is a block diagram illustrating another device according to an exemplary embodiment. On the basis of the embodiment as shown in Fig. 4, the device 400 in Fig. 5 may further include a judgment or determining module 403.

The judgment or determining module 403 is configured to determine whether a preset trigger event with respect to the application is monitored. When the preset trigger event with respect to the application is monitored, the acquisition module 401 acquires the graphical account identification of the application.

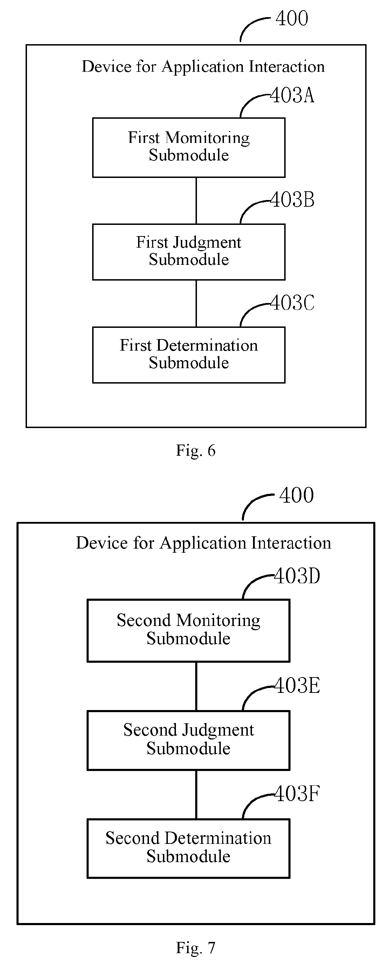

Fig. 6 is a block diagram illustrating another device according to an exemplary embodiment. On the basis of the embodiment as shown in Fig. 5, the judgment or determining module 403 as shown in Fig. 6 may include a first monitoring or detecting submodule 403A, a first judgment or determining submodule 403B and a first determination submodule 403C.

The first monitoring or detecting submodule 403A is configured to monitor a touch event with respect to the icon of the application.

The first judgment submodule 403B is configured to determine whether the monitored touch event is a first preset event. In practical application, the first preset event may include a long press event.

The first determination submodule 403C is configured to, when the monitored touch event is the first preset event, determine that the preset trigger event with respect to the application is monitored.

It should be illustrated that the structures of the first monitoring or detecting submodule 403A, the first judgment or determining submodule 403B and the first determination submodule 403C illustrated in the foregoing embodiment of the device as shown in Fig. 6 may also be included in the embodiment of the device as shown in Fig. 4, and the present disclosure does not impose limitations on this.

Fig. 7 is a block diagram illustrating another device according to an exemplary embodiment. On the basis of the embodiment as shown in Fig. 5, the judgment or determining module 403 as shown in Fig. 7 may also include a second monitoring or detecting submodule 403D, a second judgment or determining submodule 403E and a second determination submodule 403F.

The second monitoring or detecting submodule 403D is configured to monitor a touch event with respect to a system desktop.

The second judgment or determining submodule 403E is configured to determine whether the monitored touch event is a second preset event. In practical application, the second preset event may include a long press event.

The second determination submodule 403F is configured to, when the monitored touch event is the second preset event, determine that the preset trigger event with respect to the application is monitored.

It should be illustrated that the structures of the second monitoring or detecting submodule 403D, the second judgment or determining submodule 403E and the second determination submodule 403F illustrated in the foregoing embodiment of the device as shown in Fig. 7 may also be included in the embodiment of the device as shown in Fig. 4 or 6, and the present disclosure does not impose limitations on this.

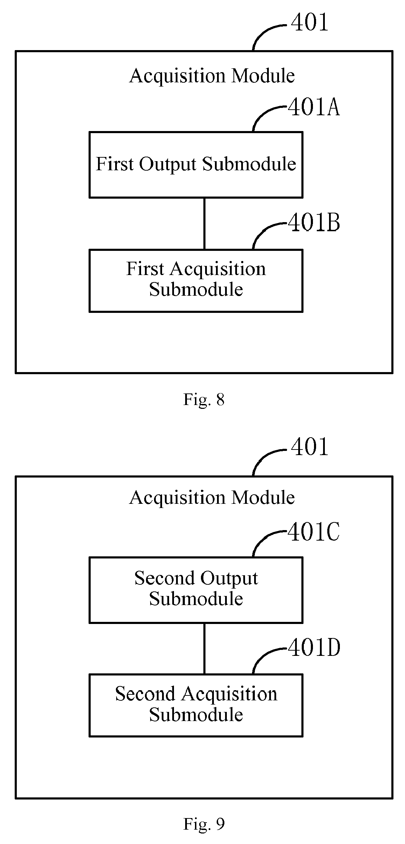

Fig. 8 is a block diagram illustrating another device according to an exemplary embodiment. On the basis of the embodiment as shown in Fig. 5, the acquisition module 401 as shown in Fig. 8 may include a first output submodule 401A and a first acquisition submodule 401B.

The first output submodule 401A is configured to output an image selection interface to a user, wherein the image selection interface includes a plurality of preset avatar images.

The first acquisition submodule 401B is configured to acquire an avatar image selected by the user for the application in the image selection interface as the graphical account identification of the application, and locally save a correspondence between the avatar image and a login-in account currently used by the application.

It should be illustrated that the structures of the first output submodule 401A and the first acquisition submodule 401B illustrated in the foregoing embodiment of the device as shown in Fig. 8 may also be included in the embodiments of the devices as shown in Figs. 4, 6-7, and the present disclosure does not impose limitations on this.

Fig. 9 is a block diagram illustrating another device according to an exemplary embodiment. On the basis of the embodiment as shown in Fig. 5, the acquisition module 401 as shown in Fig. 9 may include a second output submodule 401C and a second acquisition submodule 401D.

The second output submodule 401A is configured to output an image selection interface to a user, wherein the image selection interface includes a plurality of preset avatar images and frequently used login-in accounts of the application.

The second acquisition submodule 401D is configured to acquire an avatar image selected by the user for the application in the image selection interface as the graphical account identification of the application, and locally save a correspondence between the avatar image and a login-in account selected by the user for the avatar image in the image selection interface.

It should be illustrated that the structures of the second output submodule 401C and the second acquisition submodule 401D illustrated in the foregoing embodiment of the device as shown in Fig. 9 may also be included in the embodiments of the devices as shown in Figs. 4, 6-8, and the present disclosure does not impose limitations on this.

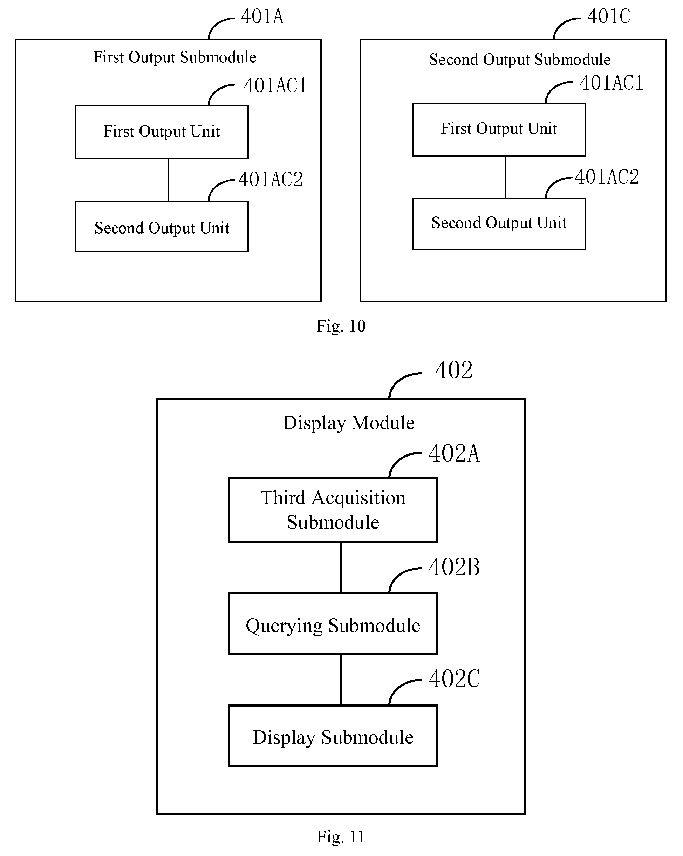

Fig. 10 is a block diagram illustrating another device according to an exemplary embodiment. On the basis of the embodiment as shown in Fig. 8 or 9, the first output submodule 401A and the second output submodule 401C as shown in Fig. 10 may individually include a first output unit 401AC1 and a second output unit 401AC2.

The first output unit 401AC1 is configured to output a function selection interface to a user, wherein the function selection interface includes setting options for the graphical account identification.

The second output unit 401AC2 is configured to, when a setting option for the graphical account identification is selected by the user through operating the function selection interface, output the image selection interface to the user; or, when a setting option for the graphical account identification is selected by the user through operating the function selection interface, output an application selection interface to the user, and when the application is selected by the user in the application selection interface, output the image selection interface to the user.

It should be illustrated that the structures of the first output unit 401AC1 and the second output unit 401AC2 illustrated in the foregoing embodiment of the device as shown in Fig. 10 may also be included in the embodiments of the devices as shown in Figs. 5-9, and the present disclosure does not impose limitations on this.

Fig. 11 is a block diagram illustrating another device according to an exemplary embodiment. On the basis of the embodiment as shown in Fig. 4, the display module 402 as shown in Fig. 11 may include a third acquisition submodule 402A, a querying submodule 402B and a display submodule 402C.

The third acquisition submodule 402A is configured to acquire a login-in account currently used by the application.

The querying submodule 402B is configured to query the correspondence to acquire an avatar image corresponding to the login-in account currently used by the application.

The display submodule 402C is configured to display the acquired avatar image at the preset position on the icon of the application.

It should be illustrated that the structures of the third acquisition submodule 402A, the querying submodule 402B and the display submodule 402C illustrated in the foregoing embodiment of the device as shown in Fig. 11 may also be included in the embodiments of the devices as shown in Figs. 5-10, and the present disclosure does not impose limitations on this.

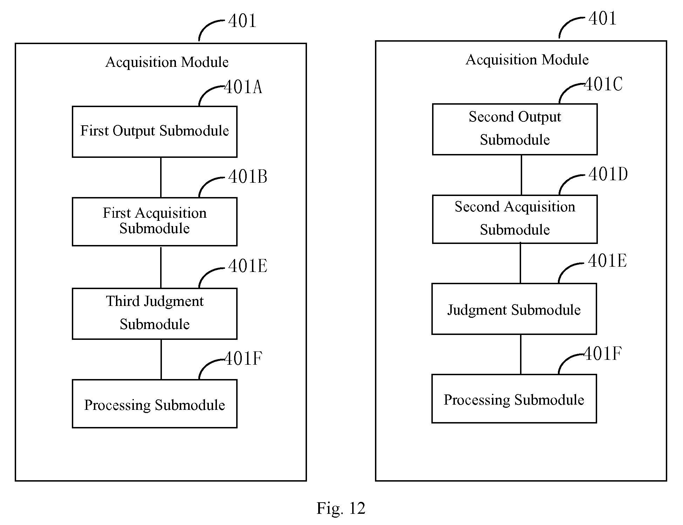

Fig. 12 is a block diagram illustrating another device according to an exemplary embodiment. On the basis of the embodiments as shown in Figs. 8 and 9, the acquisition module 401 as shown in Fig. 12 may include a third judgment or determining submodule 401E and a processing submodule 401F.

The third judgment or determining submodule 401E is configured to whether the acquired avatar image is of a size greater than a preset size. When the avatar image is of a size less than or equal to the preset size, the display module 402 displays the avatar image at the preset position on the icon of the application.

The processing submodule 401F is configured to, when the avatar image is of a size greater than the preset size, process the avatar image into an avatar image of the preset size. Then the processed avatar image of the preset size is displayed at the preset position on the icon of the application by the display module 402.

It should be illustrated that the structures of the third judgment or determining submodule 401E and the processing submodule 401F illustrated in the foregoing embodiment of the device as shown in Fig. 12 may also be included in the embodiments of the devices as shown in Figs. 4-7 or 10-11, and the present disclosure does not impose limitations on this.

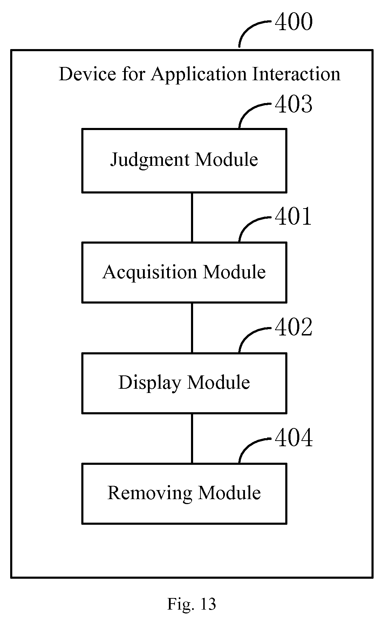

Fig. 13 is a block diagram illustrating another device according to an exemplary embodiment. On the basis of the embodiment as shown in Fig. 5, the device 400 as shown in Fig. 13 may also include a removing module 404.

The removing module 404 is configured to, when a logout state of the application is detected, remove the avatar image displayed at the preset position on the icon of the application.

It should be illustrated that the structure of the removing module 404 illustrated in the foregoing embodiment of the device as shown in Fig. 13 may also be included in the embodiments of the devices as shown in Figs. 4, and 6-12, and the present disclosure does not impose limitation on this.

With respect to the devices in the above embodiments, the specific manners for performing operations for individual modules or units therein have been described in detail in the embodiments regarding the methods, which will not be elaborated herein.

The embodiments of devices basically correspond to the embodiments of methods, and thus for related portions, the description about the embodiments of methods may be referred to. The above described embodiments of devices are only illustrative, and portions described as separated modules may be or may not be physically separated, and the portions shown as respective modules may be or may not be physical modules, i.e., the portions may be located at one place, or may be distributed over a plurality of network modules. A part or whole of the modules may be selected to realize the objects of the technical solutions of the present disclosure according to actual requirements. One of ordinary skill in this art may understand and practice the technical solutions of the present disclosure without creative work.

Accordingly, the present disclosure further provides a device for application interaction, including: a processor; and a memory for storing instructions executable by the processor; wherein the processor is configured to: acquire a graphical account identification of an application, wherein the graphical account identification is configured to graphically identify login-in account information currently used by the application; and display the graphical acquired account identification at a preset position on the icon of the application.

Accordingly, the present disclosure provides a terminal. The terminal includes a memory and one or more programs. The one or more programs are stored in the memory, and are configured to be executed by one or more processors to perform instructions including the following steps: acquiring a graphical account identification of an application, wherein the graphical account identification is configured to graphically identify login-in account information currently used by the application; and displaying the acquired graphical account identification at a preset position on the icon of the application.

Fig. 14 is a block diagram illustrating a structure applicable in a device for application interaction according to an exemplary embodiment.

Fig. 14 is a block diagram illustrating a device 1400 for application interaction according to an exemplary embodiment. For example, the device 1400 may be a mobile phone, a computer, a digital broadcast terminal, a messaging device, a gaming console, a tablet, a medical device, exercise equipment, a personal digital assistant, and the like.

Referring to Fig. 14, the device 1400 may include one or more of the following components: a processing component 1401, a memory 1402, a power component 1403, a multimedia component 1404, an audio component 1405, an input/output (I/O) interface 1406, a sensor component 1407, and a communication component 1408.

The processing component 1401 typically controls overall operations of the terminal 1400, such as the operations associated with display, telephone calls, data communications, camera operations, and recording operations. The processing component 1401 may include one or more processors 1409 to execute instructions to perform all or part of the steps in the above described methods. Moreover, the processing component 1401 may include one or more modules which facilitate the interaction between the processing component 1401 and other components. For instance, the processing component 1401 may include a multimedia module to facilitate the interaction between the multimedia component 1404 and the processing component 1401.

The memory 1402 is configured to store various types of data to support the operation of the device 1400. Examples of such data include instructions for any applications or methods operated on the device 1400, contact data, phonebook data, messages, pictures, video, etc. The memory 1402 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 1403 provides power to various components of the device 1400. The power component 1403 may include a power management system, one or more power sources, and any other components associated with the generation, management, and distribution of power in the device 1400.

The multimedia component 1404 includes a screen providing an output interface between the device 1400 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 1404 includes a front camera and/or a rear camera. The front camera and/or the rear camera may receive an external multimedia datum while the device 1400 is in an operation mode, such as a photographing mode or a video mode. Each of the front camera and the rear camera may be a fixed optical lens system or have focus and optical zoom capability.

The audio component 1405 is configured to output and/or input audio signals. For example, the audio component 1405 includes a microphone ("MIC") configured to receive an external audio signal when the device 1400 is in an operation mode, such as a call mode, a recording mode, and a voice recognition mode. The received audio signal may be further stored in the memory 1402 or transmitted via the communication component 1408. In some embodiments, the audio component 1405 further includes a speaker to output audio signals.

The I/O interface 1402 provides an interface between the processing component 1401 and peripheral interface modules, such as a keyboard, a click wheel, buttons, and the like. The buttons may include, but are not limited to, a home button, a volume button, a starting button, and a locking button.

The sensor component 1407 includes one or more sensors to provide status assessments of various aspects of the device 1400. For instance, the sensor component 1407 may detect an open/closed status of the device 1400, relative positioning of components, e.g., the display and the keypad, of the device 1400, a change in position of the device 1400 or a component of the device 1400, a presence or absence of user contact with the device 1400, an orientation or an acceleration/deceleration of the device 1400, and a change in temperature of the device 1400. The sensor component 1407 may include a proximity sensor configured to detect the presence of nearby objects without any physical contact. The sensor component 1407 may also include a light sensor, such as a CMOS or CCD image sensor, for use in imaging applications. In some embodiments, the sensor component 1407 may also include an accelerometer sensor, a gyroscope sensor, a magnetic sensor, a pressure sensor, or a temperature sensor.

The communication component 1408 is configured to facilitate communication, wired or wirelessly, between the device 1400 and other devices. The device 1400 can access a wireless network based on a communication standard, such as WiFi, 2G, or 3G, or a combination thereof. In one exemplary embodiment, the communication component 1408 receives a broadcast signal or broadcast associated information from an external broadcast management system via a broadcast channel. In one exemplary embodiment, the communication component 1408 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the device 1400 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as included in the memory 1402, executable by the processor 1409 in the device 1400, for performing the above-described methods. For example, the non-transitory computer-readable storage medium may be a ROM, a RAM, a CD-ROM, a magnetic tape, a floppy disc, an optical data storage device, and the like.

A non-transitory computer-readable storage medium, when instructions in the storage medium is performed by a processor of the mobile terminal, enables the mobile terminal to perform a method for application interaction. The method including: acquiring a graphical account identification of an application, wherein the graphical account identification is configured to graphically identify login-in account information currently used by the application; and displaying the acquired graphical account identification at a preset position on the icon of the application.

## Claims

1. A method for application interaction, comprising:
acquiring (101) a graphical account identification of an application, wherein the graphical account identification is configured to graphically identify login-in account information currently used by the application; and
displaying (102) the acquired graphical account identification at a preset position on an icon of the application.

2. The method according to claim 1, further comprising:
judging (201) whether a preset trigger event with respect to the application is monitored; and
when the preset trigger event with respect to the application is monitored, performing the acquiring (101) of the graphical account identification of the application.

3. The method according to claim 2, wherein the judging (201) whether the preset trigger event with respect to the application is monitored comprises:
monitoring a touch event with respect to the icon of the application;
judging whether the monitored touch event is a first preset event; and
when the monitored touch event is the first preset event, determining that the preset trigger event with respect to the application is monitored; and/or
wherein the judging (201) whether the preset trigger event with respect to the application is monitored comprises:
monitoring a touch event with respect to a system desktop;
judging whether the monitored touch event is a second preset event; and
when the monitored touch event is the second preset event, determining that the preset trigger event with respect to the application is monitored.

4. The method according to any one of the preceding claims, wherein the acquiring (101) the graphical account identification of the application comprises:
outputting (202) an image selection interface to a user, wherein the image selection interface comprises a plurality of preset avatar images; and
acquiring (203) an avatar image selected by the user for the application in the image selection interface as the graphical account identification of the application, and locally saving a correspondence between the avatar image and a login-in account currently used by the application.

5. The method according to claim 4, wherein the image selection interface further comprises frequently used login-in accounts of the application.

6. The method according to claim 4 or 5, wherein the outputting (202) the image selection interface to the user comprises:
outputting a function selection interface to the user, wherein the function selection interface comprises setting options for the graphical account identification; and
when a setting option for the graphical account identification is selected by the user through operating the function selection interface, outputting the image selection interface to the user; or, when a setting option for the graphical account identification is selected by the user through operating the function selection interface, outputting an application selection interface to the user, and when the application is selected by the user in the application selection interface, outputting the image selection interface to the user.

7. The method according to claim 5 or 6, wherein the displaying (102) the acquired graphical account identification at the preset position on the icon of the application comprises:
acquiring (205) a login-in account currently used by the application;
querying (206) the correspondence to acquire an avatar image corresponding to the login-in account currently used by the application; and
displaying (207) the acquired avatar image at the preset position on the icon of the application.

8. The method according to claim 8, wherein the displaying (207) the acquired avatar image at the present position on the icon of the application as the graphical account identification of the application comprises:
judging whether the acquired avatar image is of a size greater than a preset size;
when the avatar image is of a size less than or equal to the preset size, displaying the avatar image at the preset position on the icon of the application; and
when the avatar image is of a size greater than the preset size, processing the avatar image into an avatar image of the preset size and then displaying the processed avatar image at the preset position on the icon of the application.

9. The method according to claim 8, further comprising:
when detecting a logout state of the application, removing the avatar image displayed at the preset position on the icon of the application.

10. A device for application interaction, comprising:
an acquisition module (401) configured to acquire a graphical account identification of an application, wherein the graphical account identification is configured to graphically identify login-in account information currently used by the application; and
a display module (402) configured to display the acquired graphical account identification at a preset position on an icon of the application.

11. The device according to claim 10, further comprising:
a judgment module (403) configured to determine whether a preset trigger event with respect to the application is monitored;
wherein when the preset trigger event with respect to the application is monitored, the acquisition module (401) acquires the graphical account identification of the application.

12. The device according to claim 11, wherein the judgment module (403) comprises:
a first monitoring submodule (403A) configured to monitor a touch event with respect to the icon of the application;
a first judgment submodule (403B) configured to determine whether the monitored touch event is a first preset event; and
a first determination submodule (403C) configured to, when the monitored touch event is the first preset event, determine that the preset trigger event with respect to the application is monitored; and/or
a second monitoring submodule (403D) configured to monitor a touch event with respect to a system desktop;
a second judgment submodule (403E) configured to determine whether the monitored touch event is a second preset event; and
a second determination submodule (403F) configured to, when the monitored touch event is the second preset event, determine that the preset trigger event with respect to the application is monitored.

13. The device according to any one of claims 10 to 12, wherein the acquisition module (401) comprises:
a first output submodule (401A) configured to output an image selection interface to a user, wherein the image selection interface comprises a plurality of preset avatar images; and
a first acquisition submodule (401B) configured to acquire an avatar image selected by the user for the application in the image selection interface as the graphical account identification of the application, and locally save a correspondence between the avatar image and a login-in account currently used by the application.

14. The device according to any one of claims 10 to 13, wherein the acquisition module (401) comprises:
a second output submodule (401C) configured to output an image selection interface to a user, wherein the image selection interface comprises a plurality of preset avatar images and frequently used login-in accounts of the application; and
a second acquisition submodule (401D) configured to acquire an avatar image selected by the user for the application in the image selection interface as the graphical account identification of the application, and locally save a correspondence between the avatar image and a login-in account selected by the user for the avatar image in the image selection interface.

15. The device according to claim 13 or 14, wherein the first output submodule (401A) comprises:
a first output unit (401AC1) configured to output a function selection interface to a user, wherein the function selection interface comprises setting options for the graphical account identification; and
a second output unit (401AC2) configured to, when a setting option for the graphical account identification is selected by the user through operating the function selection interface, output the image selection interface to the user; or, when a setting option for the graphical account identification is selected by the user through operating the function selection interface, output an application selection interface to the user, and when the application is selected by the user in the application selection interface, output the image selection interface to the user;
and wherein the second output submodule (401 C) comprises:
a first output unit (401AC1) configured to output a function selection interface to a user, wherein the function selection interface comprises setting options for the graphical account identification; and
a second output unit (401AC2) configured to, when a setting option for the graphical account identification is selected by the user through operating the function selection interface, output the image selection interface to the user; or, when a setting option for the graphical account identification is selected by the user through operating the function selection interface, output an application selection interface to the user, and when the application is selected by the user in the application selection interface, output the image selection interface to the user;
igured to graphically ident(402) comprises:
a third acquisition submodule (402A) configured to acquire a login-in account currently used by the application;
a querying submodule (402B) configured to query the correspondence to acquire an avatar image corresponding to the login-in account currently used by the application; and
a display submodule (402C) configured to display the acquired avatar image at the preset position on the icon of the application.
